(19) Europäisches Patentamt
European Patent Office
Office européen des brevets

(11) Veröffentlichungsnummer: **0 295 676 A2**

(12) **EUROPÄISCHE PATENTANMELDUNG**

(21) Anmeldenummer: **88109642.4**

(22) Anmeldetag: **16.06.88**

(51) Int. Cl.⁴: **C08G 73/06 , C08G 73/00 , H01M 4/60 , C25B 3/10**

(30) Priorität: **19.06.87 DE 3720321**

(43) Veröffentlichungstag der Anmeldung: **21.12.88 Patentblatt 88/51**

(84) Benannte Vertragsstaaten: **DE FR GB NL**

(71) Anmelder: **BASF Aktiengesellschaft
Carl-Bosch-Strasse 38
D-6700 Ludwigshafen(DE)**

(72) Erfinder: **Naarmann, Herbert, Dr
Haardtblick 15
D-6719 Wattenheim(DE)**
Erfinder: **Naegele, Dieter, Dr
Gudastrasse 2
D-6520 Worms 1(DE)**

(54) **Durch oxidative Polymerisation erhältliche Polymere.**

(57) Die Erfindung betrifft durch oxidative Polymerisation erhältliche Polymere, aufgebaut aus

a) 75 bis 100 Gew.% gleicher oder verschiedener Monomerer der allgemeinen Formel I

$H(NH)_m$-Ar-$NH_2$ I

in der m für 0 oder 1 und Ar für eine der nachstehenden Gruppierungen steht

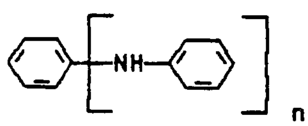 ,

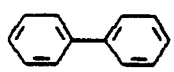 , 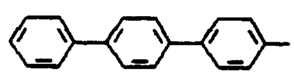 , 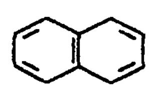 ,

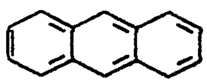 , 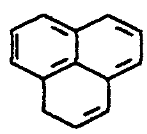 , 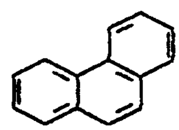 , 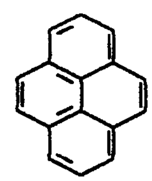 ,

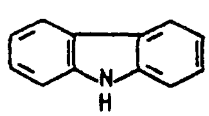 , 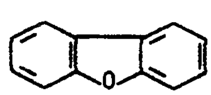 , 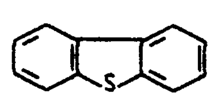 ,

wobei n einen Wert von 1 bis 50 hat und wobei die Aminogruppen an beliebiger Stelle mit der Gruppierung Ar verknüpft sein können, und wobei Benzidin (p,p′-Diaminodiphenyl) als Monomeres ausgeschlossen ist, und

EP 0 295 676 A2

b) 0 bis 25 Gew.% gleicher oder verschiedener sonstiger oxidativ polymerisierbaren Monomeren (Monomere II).

## Durch oxidative Polymerisation erhältliche Polymere

Die Erfindung betrifft durch oxidative Polymerisation erhältliche Polymere, aufgebaut aus

a) 75 bis 100 Gew.% gleicher oder verschiedener Monomerer der allgemeinen Formel I

$H(NH)_m$-Ar-$NH_2$ I

in der m für 0 oder 1 und Ar für eine der nachstehenden Gruppierungen steht

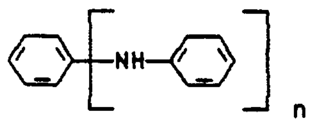 ,

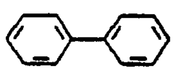 , 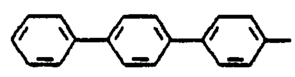 , 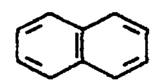 ,

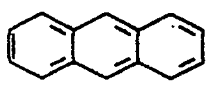 , 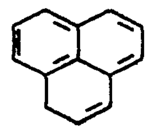 , 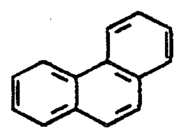 , 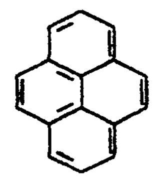 ,

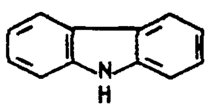 , 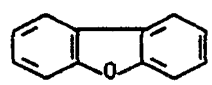 , 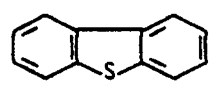 ,

wobei n einen Wert von 1 bis 50 hat und wobei die Aminogruppen an beliebiger Stelle mit der Gruppierung Ar verknüpft sein können, und wobei Benzidin (p,p′-Diaminodiphenyl) als Monomeres ausgeschlossen ist und

b) 0 bis 25 Gew.% gleicher oder verschiedener sonstiger oxidativ polymerisierbaren Monomeren (Monomere II).

Außerdem betrifft die Erfindung Verfahren zur Herstellung dieser Polymeren sowie deren Verwendung als elektrisch leitfähige Materialien.

Anilinpolymere sind seit vielen Jahren bekannt (siehe z.B. Marcel Dekker, Handbooks of Conducting Polymers, Vol. 1, S. 718 (1986) und M.C. Josefovicz, C.r. Hebd. Séance. Acad. Sci., Paris, Ser. C, 269, 964 (1969)).

Chemisch oder elektrochemisch hergestellte Anilinpolymere lassen sich durch Oxidation oder Reduktion reversibel aus Dotierungsmitteln be- und entladen, d.h. diese Polymere eignen sich prinzipiell als Elektrodenmaterialien für elektrochemische Zellen, insbesondere für Sekundärzellen.

Dieser Anwendung steht jedoch der zu hohe Gehalt an Benzidin entgegen, da diese als stark cancerogen eingestufte Verbindung als Nebenprodukt bei den üblichen Herstellungsverfahren gebildet wird.

In der EP-A-224 989 ist ein Verfahren zur Herstellung von Polyanilin durch anodische Oxidation von Anilin beschrieben, bei welchem die Bildung von Benzidin infolge eines stark sauren Mediums weitgehend verhindert wird.

Nachteilig bei diesem Verfahren ist jedoch die zeitaufwendige Aufarbeitung des Polymeren.

Die Verwendung von weiteren aromatischen Stickstoffheterocyclen wie Pyrrol und seiner Derivate als Copolymere bei der Anilinpolymerisation ist aus der DE-A-33 38 904 bekannt. Die mechanischen Eigenschaften der nach diesem Verfahren herstellbaren Polymeren sind denen der reinen Anilinpolymeren überlegen, jedoch erhält man auch bei diesem Verfahren Benzidin als Nebenprodukt.

Der vorliegenden Erfindung lag daher die Aufgabe zugrunde, Polymere mit mechanisch und elektrisch guten Eigenschaften herzustellen, bei deren Herstellung durch die Auswahl geeigneter Monomerer die Benzidinbildung weitgehend unterdrückt werden kann.

Demgemäß wurden die eingangs definierten Polymeren gefunden.

Die erfindungsgemäßen Polymerketten bestehen aus Monomerbausteinen mit ein- oder mehrkernigen

aromatischen oder heteroaromatischen Verbindungen als wiederkehrenden Einheiten.

Ist m = 0, d.h. enthalten die Monomeren nur eine primäre Aminogruppe, so erhält man, wie am Beispiel des 4-Aminodiphenyls veranschaulicht sei, Polymere der Struktur

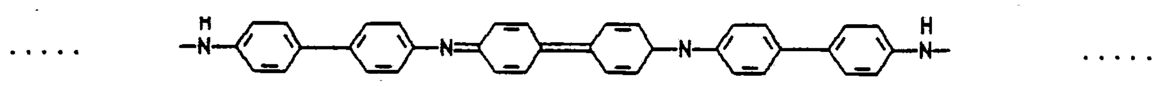

in denen die Einheiten zum Teil in chinoider Form vorliegen.

Die Polymeren bilden mit ionischen Verbindungen (Leitsalzen) wie Säuren HX leitfähige Polymere der Form

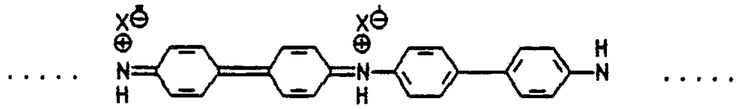

wobei das Anion $X^{\ominus}$ nicht an der positiven Ladung lokalisiert ist.

Ebenso verhält es sich mit den Monoaminen der übrigen definitionsgemäßen Aromaten, wobei die Aminogruppe prinzipiell in beliebiger Stellung, im Falle des Diphenyls und Triphenyls jedoch vorzugsweise in p-Stellung zum Phenylrest, stehen kann. Beispiele dieser Monomeren sind Aminodiphenylamin, Amino-p-biphenyl, Amino-p-terphenyl, die Naphthylamine, die Aminoanthracene, die Aminophenalene, die Aminophenanthrene, die Aminopyrene, die Aminocarbazole, die Aminodibenzofurane und die Aminodibenzothiophene.

Ist m = 1, d.h. enthält das Monomere zwei primäre Aminogrupen, so entstehen bei der oxidativen Polymerisation auch Polymere mit Azobrücken, wie am Beispiel des 4,4′-Diamino-p-terphenyls gezeigt sei:

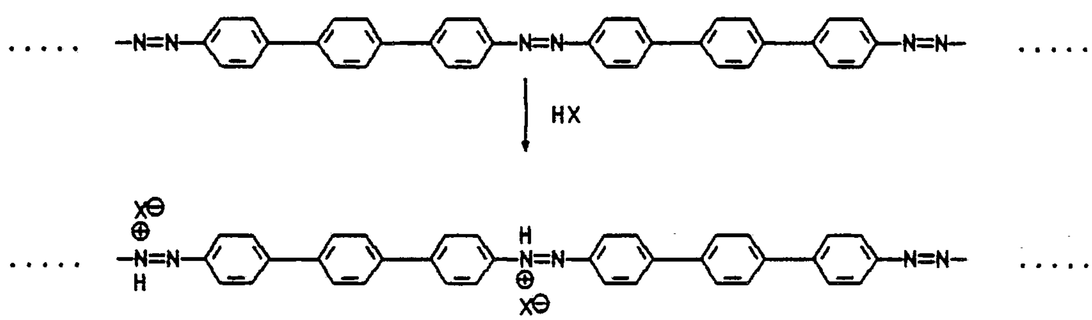


Die zusätzliche Aminogruppe ist vorzugsweise an unterschiedlichen Kernen der Gruppierung Ar als Substituent angebracht, wobei die Verknüpfung in beliebiger Stellung am Ring erfolgen kann, vorzugsweise jedoch im geometrisch größten Abstand.

Die Herstellung dieser Monomeren ist dem Fachmann geläufig. Die oligomeren oder polymeren Verbindungen für n>1 werden aus den Monomeren durch stufenweisen Aufbau z.B. mit Hilfe von p-Nitrofluorbenzol hergestellt (Bull. Soc. Chim. 311 [1956]).

Die Monomeren können allein oder in Mischung miteinander eingesetzt werden, wobei 75 bis 100 Gew.%, vorzugsweise 85 bis 95 Gew.% Monomere I die Polymerkette bilden.

Zusätzlich können die erfindungsgemäßen Polymere die Monomeren II in Mengen von 0 bis 25 Gew.%, vorzugsweise 10 bis 20 Gew.% enthalten.

Bei aromatischen 5- oder 6-gliedrigen Stickstoffheterocyclen als Monomeren II kommen besonders das Pyrrol und seine Derivate in Betracht.

Geeignete Derivate des Pyrrols sind die N-Alkylpyrrole und N-Arylpyrrole sowie die an den C-Atomen monoalkyl-, monohalogen- oder dialkyl-, dihalogeno-substituierten Pyrrole.

Die Polymerisation dieser Monomeren ist aus den Schriften von A.F. Diaz et al, J.C.S. Chem. Comm. 1979, Seite 635; J.C.S. Chem. Comm. 1979, Seite 854; ACS Org. Coat. Plast. Chem. 43 (1980) bekannt.

Bei der Herstellung der erfindungsgemäßen Polymeren können die Pyrrole allein oder in Mischung miteinander eingesetzt werden, so daß die Copolymere ein oder mehrere verschiedene Pyrrole eingebaut enthalten können. Vorzugsweise leiten sich die wiederkehrenden Pyrrol-Einheiten in den Copolymeren im wesentlichen vom unsubstituierten Pyrrol ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Von den höhergliedrigen Vertretern der Heterocyclen sei das Dipyrrol

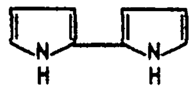

genannt.

Ferner kommen das 2-Aminopyridin und das 5-Amino-indol

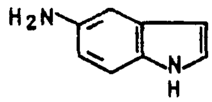

in Betracht.

Zusätzlich können als Comonomere II auch Vinylcarbazol sowie stickstoffhaltige Acrylsäurederivate wie Acrylnitril und Acrylamide eingesetzt werden. Besonders bevorzugt ist hierbei das Diacetonacrylamid.

Zur Herstellung der Polymeren werden die Monomeren I bzw. I und II, vorzugsweise in einem polaren organischen Lösungsmittel in Gegenwart eines geeigneten Leitsalzes anodisch oder chemisch oxidativ polymerisiert.

Die Gesamtmonomerkonzentration beträgt im allgemeinen von 0,01 bis 2,5, vorzugsweise von 0,1 bis 1 mol pro Liter Lösungsmittel.

Als Leitsalze dienen bei der anodischen Oxidation bevorzugt ionische oder ionogene Verbindungen mit Anionen starker, oxidierender Säuren oder saure Gruppen tragende aromatische Verbindungen, darunter vor allem solche, die zusätzlich noch Nitro- oder Nitrosogruppen enthalten. Als Anionen des Leitsalzes können $BF_4^-$, $AsF_4^-$, $R\text{-}SO_3^-$, $AsF_6^-$, $SbF_6^-$, $SbCl_6^-$, $HSO_4^-$ und $SO_4^2$ eingesetzt werden.

Eine bevorzugte Gruppe von Leitsalz-Anionen sind Aromaten mit Säuresubstituenten, wie das $C_6H_5COO^-$-Anion sowie die gegebenenfalls mit Alkylgruppen substituierten aromatischen, aliphatischen und cycloaliphatischen Sulfonsäuren.

Besonders bevorzugt ist hierbei das Benzolsulfonsäureanion $C_6H_5SO_3$-.

Ferner sind als Leitsalzanionen die Nitrophenole, die Nitrogruppen-substituierten aromatischen Carbonsäuren und die Nitrogruppen-substituierten aromatischen Sulfonsäuren geeignet. Insbesondere werden die Salze von Nitro-, Dinitro-, Trinitro-Benzoesäuren sowie Nitro-, Dinitro- und Trinitro-Benzolsulfonsäuren eingesetzt. Auch sind die Salze von Nitroaromaten mit mehreren Säure-Gruppen, wie phenolischen Hydroxylgruppen, Carboxylgruppen und Sulfonsäuregruppen geeignet.

Als Kationen für diese Leitsalze kommen neben den Erdalkalimetall-Kationen und $H^+$ insbesondere die Alkalimetall-Kationen, vorzugsweise $Li^+$, $Na^+$ oder $K^+$, in Betracht. Sehr günstig sind auch die $NO^+$-und $NO_2^+$-Kationen sowie insbesondere die Onium-Kationen, vor allem des Stickstoffs und des Phosphors, etwa des Typs $R_4N^+$ und $R_4P^+$, worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeutet. Unter den Ammonium- und Phosphonium-Kationen sind diejenigen besonders bevorzugt, in denen R Wasserstoff und/oder einen Alkylrest mit 1 bis 4 C-Atomen darstellt.

Beispiele bevorzugter Onium-Kationen sind neben dem $NH_4^+$-Ion insbesondere das Tetramethylammonium-, das Tetraethylammonium-, das Tetra-n-butylammonium-, das Triphenylphosphonium- und das Tri-n-butylphosphonium-Kation.

Außerdem sind hochmolekulare Leitsalze auf Basis von natürlichen oder synthetischen Polymeren wie Heparin, Ligninsulfonsäure oder Polyphenylsulfonsäure geeignet.

Die Leitsalzkonzentration beträgt in dem erfindungsgemäßen Verfahren im allgemeinen 0,001 bis 1, vorzugsweise 0,01 bis 0,1 m/l, in speziellen Fällen kann auch in Leitsalzschmelzen bei Temperaturen bis zu 180° C gearbeitet werden.

Die elektrochemische Oxidation wird in polaren organischen Lösungsmitteln durchgeführt, die die Monomeren und das Leitsalz zu lösen vermögen. Wenn mit Wasser mischbare organische Lösungsmittel angewendet werden, kann zur Erhöhung der elektrischen Leitfähigkeit eine geringe Menge an Wasser, im allgemeinen bis zu 3 Gew.%, bezogen auf das organische Lösungsmittel, zugesetzt werden, auch wenn in der Regel in einem wasserfreien System und insbesondere auch ohne Zusatz von alkalisch machenden Verbindungen gearbeitet wird. Das Lösungsmittel sollte aprotisch sein. Bevorzugt sind z.B. Ether wie 1,2-Dimethoxyethan, Dioxan, Tetrahydrofuran und Methyltetrahydrofuran, Aceton, Acetonitril, Dimethylformamid, Dimethylsulfoxid, Methylenchlorid, N-Methylpyrrolidon und Propylencarbonat. Es können aber auch - schwach protische Lösungsmittel wie Alkohole verwendet werden.

Zur Herstellung der erfindungsgemäßen Polymeren arbeitet man vorzugsweise mit einer üblichen elektrolytischen Zelle oder Elektrolyse-Apparatur, bestehend aus einer Zelle ohne Diaphragma, 2 Elektroden und einer externen Stromquelle, gearbeitet. Die Elektroden können dabei beispielsweise aus Nickel, Titan oder Graphit bestehen; auch Edelmetallelektroden, bevorzugt Platinelektroden, können verwendet werden. Dabei sollte zumindest die Anode, insbesondere aber beide Elektroden, flächenförmig ausgebildet sein.

In einer besonderen Ausgestaltungsform des erfindungsgemäßen Verfahrens kann die Anode auch aus einem elektrisch leitfähigen Polymeren gebildet werden, z.B. aus durch anodische Oxidation hergestelltem Polypyrrol, dotiertem Polyacetylen oder Polyphenylen. In diesen Fällen werden die Monomeren auf die im allgemeinen filmförmigen leitenden Polymeren aufpolymerisiert.

Je nach der Verfahrensführung können unterschiedliche Arten von Polymeren erhalten werden. Setzt man z.B. Edelmetall-Elektroden und eine Mischung aus Heterocyclen, insbesondere Pyrrol, und den Aminoaromaten ein, so erhält man filmförmige Polymere, welche die Monomer-Einheiten in statistischer Verteilung eingebaut enthalten. Die Monomeren I und II können aber auch stufenweise, d.h. nacheinander, polymerisiert werden. So kann man beispielsweise zunächst nur Pyrrol unter Abscheidung eines entsprechenden Polypyrrol-Films auf der Anode polymerisieren und anschließend durch anodische Oxidation der Monomeren I diese auf das zuvor erzeugte Polypyrrol aufpolymerisieren. Diese Verfahrensvariante liefert das gleiche Ergebnis wie die Polymerisation der Monomeren I auf einem Polypyrrolfilm als Anode. Man erhält so schichtförmig aufgebaute Copolymere bzw. Copolymer-Filme mit hoher elektrischer Leitfähigkeit. Dieses Verfahren kann auch so vorgenommen werden, daß man zuerst die Monomeren I und anschließend II polymerisiert oder daß man die Monomeren abwechselnd in mehreren Stufen polymerisiert.

Bei Einsatz von dotiertem Polyacetylen als Anodenmaterial und einer Mischung aus Pyrrol und den Monomeren I entsteht ein elektrisch hochleitfähiger Copolymer-Film mit einer Schicht aus Polyacetylen und einer hiermit über chemische Bindungen verknüpften Schicht aus den Einheiten der Heterocyclen und der Monomeren I.

Pulverförmige Polymere in gut reproduzierbaren Partikelgrößen von 0,01 bis 0,2 µm und beliebiger Menge lassen sich in einer Elektrolyseapparatur herstellen, in der eine der Elektroden rotiert und die andere fixiert ist. Es können auch beide Elektroden in entgegengesetztem Drehsinn rotieren. Dazu haben die Elektroden zweckmäßigerweise Rohr- oder Kegelform. Die Umdrehungsgeschwindigkeit beträgt von 0,01 bis 100 $Umin^{-1}$. Das entstehende Polymere wird hierbei kontinuierlich abgestreift.

Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragma oder solche mit Referenzelektroden zur exakten Potentialbestimmung. Zur Kontrolle der Schichtstärke der abgeschiedenen Filme ist eine Messung der Strommenge zweckmäßig.

Auch die filmförmige kontinuierliche Abscheidung der Polymeren auf einer rotierenden Anode ist eine bevorzugte Ausführungsform.

Normalerweise führt man die Elektrolyse bei Raumtemperatur und unter Inertgas durch. Da sich die Reaktionstemperatur bei der Polymerisation der Monomeren I als unkritisch erwiesen hat, kann die Temperatur in einem breiten Bereich variiert werden, solange die Erstarrungstemperatur oder die Siedetemperatur des Elektrolyten nicht unter- bzw. überschritten wird. Im allgemeinen hat sich eine Reaktionstemperatur im Bereich von -40 bis +40 °C als sehr vorteilhaft erwiesen; im Falle von Elektrolytschmelzen werden Temperaturen bis zu 180 °C angewandt.

Als Stromquelle für den Betrieb der elektrolytischen Zelle eignet sich jede Gleichstromquelle, z.B. eine Batterie, die eine hinreichend hohe elektrische Spannung liefert. Zweckmäßigerweise liegt die Spannung im Bereich von etwa 1 bis 25 Volt; als besonders vorteilhaft haben sich Spannungen im Bereich von etwa 2 bis 12 Volt erwiesen. Die Stromdichte liegt üblicherweise im Bereich von 0,05 bis 100 $mA/cm^2$, vorzugsweise im Bereich von 0,1 bis 20 $mA/cm^2$.

Die während der Elektrolyse anodisch abgeschiedenen erfindungsgemäßen Polymeren werden zur Entfernung von anhaftendem Leitsalz mit Lösungsmitteln gewaschen und bei Temperaturen von 30 bis 150 °C, vorzugsweise unter vermindertem Druck, getrocknet. Bei Einsatz von Graphit- oder Edelmetall-Elektroden lassen sich danach die im allgemeinen filmförmig abgeschiedenen Copolymere leicht von der Elektrode ablösen, vor allem wenn die Schichtstärken über 50 µm betragen.

Die chemische oxidative Polymerisation der Monomeren I und II erfolgt in an sich bekannter Weise.

Geeignete Oxidationsmittel sind z.B. Peroxomonosulfate, Peroxodisulfate und Perborate sowie Chromate oder Dichromate, Perchromate, Bleidioxid und Wasserstoffperoxid.

Die chemisch oxidativen Polymerisationen werden vorzugsweise in wäßrigen Reaktionsmedien mit

Mineralsäuren wie Schwefel- oder Salzsäure durchgeführt.

Die erfindungsgemäßen Polymeren zeigen hohe elektrische Leitfähigkeiten, im allgemeinen im Bereich von 1 bis $10^2\Omega^{-1}cm^{-1}$. Sie haben gute mechanische Eigenschaften. Zur Messung der Reißfestigkeit werden Filme aus den erfindungsgemäßen Copolymeren mit definierter Abmessung (Einspannlänge 25 mm, Meßlänge 10 mm, Breite 4 mm) gemäß DIN 53504 auf einer INSTRON 1112-Maschine bis zum Bruch gestreckt. Die Filme erfahren hierbei nur eine unwesentliche Dehnung. Die elektrische Leitfähigkeit in $\Omega^{-1}cm^{-1}$ wird durch Kontaktierung der Filme mit Leitsilber und Messung nach der Zweipunktmethode bestimmt. Gleiche Ergebnisse erhält man durch Messung nach der Vierpunktmethode, wobei die Übergangswiderstände der Kontaktierung keine Rolle spielen. Ein Beitrag von Ionenleitung zum Stromfluß konnte nicht festgestellt werden.

Durch den Einsatz der Monomeren I wird eine Benzidinbildung verhindert und somit die problemlose Verwendung des kostengünstigen Polymerisats ermöglicht.

Die pulverförmigen Polymerisate sind in organischen Lösungsmitteln gut löslich, wodurch sich eine weitere Anwendung z.B. als Korrosionsschutz ergibt.

Die erfindungsgemäßen Polymeren haben sehr gute anwendungstechnische Eigenschaften und können zur Herstellung von Elektroden, Katalysatoren, elektrischen Speichersystemen, vorzugsweise als Elektroden für Sekundärbatterien, als Schalter, Halbleiter-Bauteile, Abschirmmaterialien, Solarzellen und zur antistatischen Ausrüstung von Kunststoffen verwendet werden. Vor allem sind sie in den Fällen besonders bevorzugt, in welchen die Bauteile bei geringem Gewicht gute mechanische Eigenschaften haben sollen.

## Beispiele

### Beispiel 1 bis 4

### Chemisch oxidative Polymerisation der Monomeren

### Beispiel 1

In 150 ml 1n HCl wurden 8,4 g Anilin und 0,9 g Pyrrol gelöst. Bei 5 °C wurde eine Lösung aus 23,8 g Natriumperoxodisulfat und 50 ml Wasser langsam zugetropft. Nach beendeter Zugabe wurde die Lösung auf 15 °C erwärmt und weitere 10 min gerührt, wonach das Polymerisat abfiltriert und mit Wasser säurefrei gewaschen wurde.

Das Polymerisat wurde anschließend 12 Stunden in 150 ml 25 %igem $NH_3$ belassen, danach unter Stickstoff abgetrennt und mit wäßriger Ammoniaklösung gewaschen. Die Trocknung erfolgte unter Stickstoff über einen Zeitraum von 10 Stunden bei 50 °C und 0,3 mbar.

Es wurden 6,7 g eines violetten, pulverförmigen Polymerisats erhalten, das keinen Schwefel und keinen Sauerstoff mehr enthielt.

Das Pulver wurde in DMF gelöst. Nach Verdunsten des Lösungsmittels entstand ein stark reflektierender Polymerisatfilm, der eine Reißfestigkeit von 100 $N/mm^2$ aufwies (gemessen nach DIN 53 455).

### Beispiel 1a zum Vergleich

Nach der Arbeitsweise von Beispiel 1, jedoch nur mit Anilin als Monomerem, wurde nach Lösen des Polymerisats in N-Methylpyrolidon ein Polyanilinfilm erhalten, dessen Reißfestigkeit 55 $N/mm^2$ betrug.

Beispiel 2

18,4 g p-Aminodiphenylamin (PADA) wurden in 200 ml 5 %iger $H_2SO_4$ aufgeschlämmt und mit einer Lösung aus 100 g Natriumperoxidisulfat und 200 g Wasser versetzt und bei Raumtemperatur gerührt. Im Verlauf der Zugabe des Oxidationsmittels stieg die Temperatur bis auf 50 °C. Das gebildete Polymere wurde nach 1-stündigem Rühren abgetrennt und neutral gewaschen. Die Leitfähigkeit betrug nach dem Trocknen $2{,}1 \cdot 10^{-10}$ S/cm. Das Material ist ein geeignetes Elektrodenmaterial. Die Reißfestigkeit des Films betrug 86 $N/mm^2$.

Beispiel 3

Es wurde wie in Beispiel 1 beschrieben verfahren. Anstelle von $Na_2S_2O_8$ werden 50 g Kaliumdichromat verwendet. Das gewaschene Polymere hatte nach dem Trocknen eine Leitfähigkeit von $10^{-8}$ S/cm. Die Reißfestigkeit des Films betrug 74 $N/mm^2$.

Beispiel 4

Entsprechend der Arbeitsweise von Beispiel 1, jedoch bei verschiedenen Temperaturen und unter Einsatz anderer Comonomerer mit jeweils 8,4 g Anilin, wurden Polymerisate erhalten, die anschließend auf ihre Eigenschaften als reversible elektrochemische Systeme untersucht wurden.

Dazu wurden 80 g Polymerisat mit 10 g Ruß und 10 g Polytetrafluorethylen vermischt und in ein Platinnetz verpreßt. In einer 0,5 molaren $LiClO_4$-Lösung in 250 ml Propylencarbonat und mit einer Lithiumgegenelektrode wurde bei einer Zellspannung von 0,3 V eine Ladung von 0,9 $mA/cm^2$ bzw. 98 A•h/kg gemessen.

Tabelle 1

| Nr. | Comonomer-menge [g]*) | Reaktions-temperatur [°C] | Löslichkeit im DMF bei 20°C [%] | Ladung A·h/kg |
|---|---|---|---|---|
| 1 | 0,9 g Pyrrol | 0 | 10 | 105 |
| 2 | 0,9 g Dipyrrol | 5 | 8 | 102 |
| 3 | 1,0 g Bisthiophen | 5 | 7 | 100 |
| 4 | 0,8 g PADA | 20 | 3 | 98 |

*) bezogen auf die gleichbleibende Menge von 8,4 g Anilin pro Ansatz.

Beispiele 5 bis 20

Elektrochemische oxidative Polymerisation der Monomeren

Beispiel 5

In einem Glasgefäß wurden 120 ml Acetonitril, jeweils 0,48 g der in der nachfolgenden Tabelle spezifizierten Mischung aus Pyrrol und p-Aminodiphenylamin (PADA) und 0,39 g des Tributylammoniumsalzes des Hexafluorarsenats ($AsF_6^-$) als Leitsalz vorgelegt. Nach Einbringen von zwei Platin-Elektroden von je

14 cm² Fläche im Abstand von 4 cm wurde unter Rühren mit einer Strommenge von 140 A•s elektrolysiert. Hierbei schied sich auf der Anode ein schwarzer Film aus den Pyrrol/PADA-Copolymeren ab. Nach dem Spülen der beschichteten Anode mit Acetonitril und Trocknen bei 60 °C ließen sich die Filme vom Platin lösen. Die Eigenschaften der erhaltenen Copolymer-Filme sind in der nachfolgenden Tabelle zusammengefaßt. Die Bestimmung von Benzidin erfolgte durch Photometrie nach der Kupplung mit Pauly's Reagenz und durch Dünnschichtchromatographie. In allen Fällen wurden Mengen < 1 ppm Benzidin nachgewiesen. Bei Durchführung der Versuche 6 bis 12 mit Anilin, anstelle von PADA, wurden Benzidinmengen bis zu 1000 ppm ermittelt.

Tabelle

| Versuch | Monomer-Gemische Teile Pyrrol [g] | Teile PADA [g] | Reißfestigkeit [N/mm²] | Leitfähigkeit [$\Omega^{-1}cm^{-1}$] |
|---|---|---|---|---|
| 5 | 0,4 | 0,08 | 50 | 35 |
| 6 | 0;38 | 0,1 | 45 | 32 |
| 7 | 0,30 | 0,18 | 45 | 30 |
| 8 | 0,24 | 0,24 | 30 | 18 |
| 9 | 0,20 | 0,28 | 24 | 10 |
| 10 | 0,10 | 0,38 | 20 | 0.8 |
| 11 | 0,01 | 0,47 | 15 | 0.5 |
| 12 | - | 0,48 | 10 | 0.6 |

Beispiel 6

Es wurde gemäß Beispiel 5 gearbeitet, jedoch wurden diesmal 0,5 g Dipyrrol und 0,2 g PADA und als Leitsalz 0,6 g Tributylammonium-Perchlorat vorgelegt. Der erhaltene Film mit einer Schichtstärke von ~50µm hatte folgende Eigenschaften:
Reißfestigkeit 25 N/mm²
elektrische Leitfähigkeit 14 $\Omega^{-1}cm^{-1}$

Beispiel 7

In einem Glasgefäß wurden 120 ml Acetonitril, 0,58 g 5-Aminoindol und als Leitsalz 0,4 g 3-Nitrophenylsulfonsäure und 1,85 g Tributylamin vorgelegt und gerührt. Unter gleichzeitigem Eindosieren von 0,1 g p,p′-Diaminodiphenylamin wurde, wie in Beispiel 5 angegeben, elektrolysiert. Man erhielt einen Copolymer-Film (Schichtstärke 40 µm) mit einer Reißfestigkeit von 20 N/mm² und einer elektrischen Leitfähigkeit von 12 $\Omega^{-1}cm^{-1}$.

Beispiel 8

In einem Glasgefäß wurden 120 ml Acetonitril, 0,48 g Pyrrol, 0,2 g 2-Aminopyridin, 0,2 g PADA und 1,5 g Tributylammoniumphenylsulfonat vorgelegt und gerührt. Die Elektrolyse wurde, wie in Beispiel 5 beschrieben, durchgeführt. Der erhaltene Copolymerfilm hatte eine Schichtstärke von 30 µm, eine Reißfestigkeit von 20 N/mm² und eine elektrische Leitfähigkeit von $\Omega^{-1}cm^{-1}$.

Beispiel 9

Es wurde wie in Beispiel 5 gearbeitet, jedoch wurde diesmal 120 ml Acetonitril, 0,5 g Methoxyphenalenon-p-aminodiphenylamin-azin

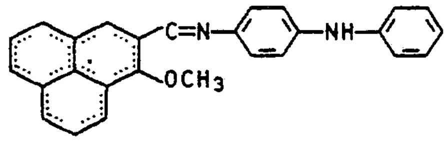

0,56 g Dipyrrol und 0,39 g Tributylammoniumperchlorats unter Argon vorgelegt. Als Anode diente ein Polypyrrolfilm. Die Elektrolyse wurde mit einer Stromdichte von 10 mA/cm durchgeführt. Man erhielt einen 30 µm dicken Film mit folgenden Eigenschaften:
Reißfestigkeit 30 N/mm²
elektrische Leitfähigkeit 11 $\Omega^{-1}cm^{-1}$

Beispiel 10

In einem Glasgefäß wurden unter Argon 120 ml Acetonitril, 0,1 g Isatinsulfonsäure, 0,61 g Pyrrol, 0,6 g PADA und 0,45 g Tributylammonium-hexafluorphosphat vorgelegt und gerührt. Als Anode diente ein p-leitender Polypyrrolfilm, der mit 16 % $PF_6^-$ dotiert war. Nach der Arbeitsweise gemäß Beispiel 5 wurde in einer Schichtstärke von ~ 40 µm ein Film mit einer Reißfestigkeit von 35 N/mm² und einer elektrischen Leitfähigkeit von 80 $\Omega^{-1}cm^{-1}$ erhalten.

Beispiel 11

In einem Glasgefäß wurden 120 ml Acetonitril, 0,40 g Pyrrol, 0,08 g PADA und 0,8 g Tetramethylammoniumtetrafluorborat vorgelegt und gerührt. Als Anode diente ein p-leitender Polyacetylenfilm, der mit 15 % $BF_4^-$ dotiert war. Die Elektrolyse wurde mit einer Stromdichte von 10 mA/cm durchgeführt; ansonsten wurde wie in Beispiel 5 gearbeitet. Der erhaltene Copolymerfilm (Schichtstärke ~ 40 µm) hatte eine Reißfestigkeit von 20,0 N/mm² und eine elektrische Leitfähigkeit von 70 $\Omega^{-1}cm^{-1}$.

Beispiel 12

Es wurde wie in Beispiel 11 gearbeitet, diesmal jedoch als Anode ein p-leitendes Polyphenylen eingesetzt, das mit 23 % $AsF_6^-$ dotiert war. Nach dem Aufpolymerisieren des Monomerengemischs aus Pyrrol und PADA betrug die Leitfähigkeit des Filmes 20 $\Omega^{-1}cm^{-1}$.

Beispiel 13

In einem Glasgefäß wurden 120 ml Acetonitril, 0,84 g Wasser, 0,48 g Dipyrrol, 0,2 g PADA, 0,05 g Acrylnitril und 1 g konzentrierte Schwefelsäure vorgelegt und gerührt. Die gemäß Beispiel 5 durchgeführte Elektrolyse wurde mit einer Stromdichte von 10 mA/m betrieben. Der erhaltene Copolymer-Film hatte eine Schichtdicke von 20 µm, eine Reißfestigkeit von 25 N/mm² und eine elektrische Leitfähigkeit von 15 $\Omega^{-1}cm^{-1}$.

Beispiel 14

In einem Glasgefäß wurden 120 ml Acetonitril, 0,84 g Wasser, 0,48 g Pyrrol, 0,15 g Diacetonacrylamid und 0,2 g p,p′-Diaminodiphenylamin und 1,15 g des Tributylammoniumsalzes der Phenylsulfonsäure vorgelegt und gerührt. Es wurde, wie in Beispiel 5 beschrieben, elektrolysiert, diesmal jedoch eine Stromdichte von 10 mA/m$^2$ angewandt. Der erhaltene Copolymer-Film hatte eine Schichtstärke von 40 µm, eine Reißfestigkeit von 20 N/mm$^2$ und eine elektrische Leitfähigkeit von 10 $\Omega^{-1}cm^{-1}$.

Beispiel 15

In einem Elektrolysegefäß von 4 l Volumen wurden 3200 ml Acetonitril, 20 g PADA und 25 g des Tri-n-Butylammoniumsalzes der Benzolsulfonsäure vorgelegt.

Als Elektroden wurden ein Nickelrohr mit einem Innendurchmesser von 200 mm und ein Nickelkegel verwendet, deren Abstand 3,5 mm betrug.

Die Stromdichte während der Elektrolyse betrug 1,5 mA/cm$^2$. Der Nickelkegel (Anode) rotierte mit 100 U/min, wodurch die Elektrolyselösung gerührt wurde. Das auf der Oberfläche der rotierenden Anode entstandene Polymerisat wurde von der Anode abgestreift. Das bei einer Elektrolysedauer von 2 Std. entstandene Polymerisat sammelte sich auf dem trichterförmig ausgebildeten Boden des Gefäßes und wurde abgetrennt, mit Acetonitril gewaschen sowie unter Stickstoff bei 30 mbar und 50° C getrocknet.

Das Polymerisat hatte eine Leitfähigkeit von 5$\Omega^{-1}cm^{-1}$.

Der Partikeldurchmesser betrug 0,2 µm.

Beispiel 16

Die Arbeitsweise entsprach Beispiel 15, jedoch wurde die 10fache Menge an Ausgangsmonomerem eingesetzt; die Elektroylse wurde über 25 Std. durchgeführt.

Die Leitfähigkeit des Polymerisats betrug 35$\Omega^{-1}cm^{-1}$, und der Partikeldurchmesser 0,01 µm.

Beispiel 17

Die Arbeitsweise entsprach Beispiel 15, jedoch wurden zusätzlich 5 g Pyrrol als Comonomeres eingesetzt.

Die Leitfähigkeit des Polymerisates betrug 55$\Omega^{-1}cm^{-1}$ und die Partikelgröße 0,05 µm.

Beispiel 18

Die Arbeitsweise entsprach Beispiel 17, jedoch wurde die Elektrolyse mit einer Stromdichte von 5 mA/cm$^2$ durchgeführt. Leitfähigkeit des Polymerisats: 30$\Omega^{-1}cm^{-1}$, Partikeldurchmesser: 0,08 µm.

Beispiel 19

Die Arbeitsweise entsprach Beispiel 15, jedoch wurde zusätzlich eine Mischung aus 7,5 g Pyrrol und 7,5 g Furan eingesetzt.

Leitfähigkeit des Polymerisats: 35$\Omega^{-1}cm^{-1}$, Partikeldurchmesser: 0,05 µm.

Beispiel 20

Die Arbeitsweise entsprach Beispiel 15, jedoch wurden als Monomere 20 g PADA und 10 g Pyrrol eingesetzt. Zusätzlich wurden 5 g $FeCl_3$ alle 45 min. während der Elektrolyse zugegeben.

Leitfähigkeit des Polymerisats: 28$\Omega^{-1}cm^{-1}$, Partikeldurchmesser: 0,5 µm.

**Ansprüche**

1. Durch oxidative Polymerisation erhältliche Polymere, aufgebaut aus

a) 75 bis 100 Gew.% gleicher oder verschiedener Monomerer der allgemeinen Formel I

$H(NH)_m$-Ar-$NH_2$ I

in der m für 0 oder 1 und Ar für eine der nachstehenden Gruppierungen steht

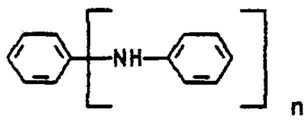 ,

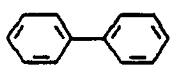 , 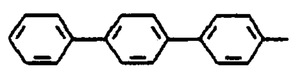 , 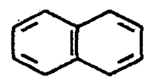 ,

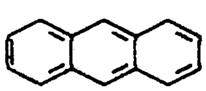 , 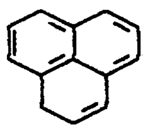 , 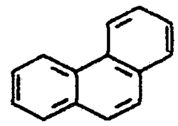 , 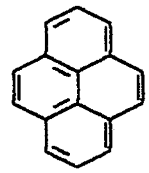 ,

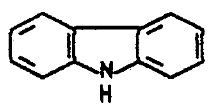 , 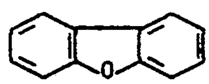 , 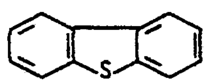 ,

wobei n einen Wert von 1 bis 50 hat und wobei die Aminogruppen an beliebiger Stelle mit der Gruppierung Ar verknüpft sein können, und wobei Benzidin (p,p′-Diaminodiphenyl) als Monomeres ausgeschlossen ist, und

b) 0 bis 25 Gew.% gleicher oder verschiedener sonstiger oxidativ polymerisierbaren Monomeren (Monomere II).

2. Polymere nach Anspruch 1, aufgebaut aus den Monomeren I, in denen m = 0 ist.

3. Polymere nach Anspurch 1, aufgebaut aus den Monomeren I, in denen für den Fall m = 1 die beiden Aminogruppen mit verschiedenen Kernen der Gruppierungen Ar verknüpft sind.

4. Polymere nach den Ansprüchen 1 bis 3, aufgebaut aus 100 Gew.% der Monomeren I.

5. Polymere nach den Ansprüchen 1 bis 3, aufgebaut aus aromatischen, 5- oder 6-gliedrigen Stickstoffheterocyclen als Monomeren II.

6. Polymere nach den Ansprüchen 1 bis 3, aufgebaut aus stickstoffhaltigen Acrylsäurederivaten als Monomeren II.

7. Verfahren zur Herstellung der Polymeren gemäß den Ansprüchen 1 bis 6 durch oxidative Polymerisation von aromatischen Aminen mit Peroxogruppen enthaltenden Oxidationsmitteln, dadurch gekennzeichnet, daß man hierzu von den Monomeren I bzw. I und II ausgeht.

8. Verfahren zur Herstellung der Polymeren gemäß den Ansprüchen 1 bis 6 durch elektrochemische Oxidation von aromatischen Aminen in Gegenwart eines Leitsalzes, dadurch gekennzeichnet, daß man von den Monomeren I bzw. I und II ausgeht.

9. Verfahren nach Anspruch 8, dadurch gekennzeichnet, daß eine Elektrode rotiert und die andere Elektrode fixiert ist oder beide Elektroden im entgegengesetzten Drehsinn rotieren, wobei das Polymere kontinuierlich abgestreift wird.

10. Verwendung der Polymeren gemäß den Ansprüchen 1 bis 6 als elektrisch leitfähige Materialien für die Herstellung von elektrischen Leitern, Kondensatoren, elektrischen Speichersystemen, Elektroden für Sekundärbatterien, Schaltern, Halbleiter-Bauteilen, Abschirmmaterialien, Sensoren, Solarzellen sowie als Antistatika in Kunststoffen.